# EUROPÄISCHE PATENTSCHRIFT

(11) **EP 0 284 920 B1**
(45) Veröffentlichungstag und Bekanntmachung des Hinweises auf die Patenterteilung: **05.05.1993**
(21) Anmeldenummer: 88104328.5
(22) Anmeldetag: 18.03.1988
(51) Int. Cl.: B29C 45/27

(54) **Heisskanal für Kunststoffspritzmaschinen**
Hot channel for plastic injection moulding machines
Canal de chauffage pour machines à injecter les matières plastiques

(30) Priorität: 31.03.1987 DE 3710139 U
(43) Veröffentlichungstag der Anmeldung: 05.10.1988
(73) Patentinhaber: Schreck, Hans, D-35099 Burgwald (DE)
(72) Erfinder: Schreck, Hans, D-35099 Burgwald (DE)
(74) Vertreter: Missling, Arne, Dipl.-Ing.

(56) Entgegenhaltungen:
- DE-A- 2 938 832
- DE-A- 3 046 471
- DE-A- 3 533 730
- US-A- 3 758 248

## Beschreibung

Die Erfindung betrifft einen Heißkanal in Blockform (Quader) mit Befestigungsmittel für die Aufspann- und Formplatte von Kunststoffspritzmaschinen.

Zur Herstellung von Kunststoffartikeln bedient man sich Kunststoffspritzmaschinen, die die zugeführten Kunststoffgranulate plastifizieren und mit hohem Druck in eine in der Kunststoffspritzmaschine eingebaute Form einspritzen. In dieser zumeist temperierten Form kühlt der Kunststoff bis zu Entformungstemperatur aus und kann dann durch Ausstoßer entfernt werden. Der Arbeitszyklus dieser Maschine, d. h. die Menge des Ausstoßes pro Zeiteinheit ist entscheidend für die Wirtschaftlichkeit der Kunststoffspritzmaschine. Zur Erhöhung der Ausstoßgeschwindigkeit werden in der Regel mehrere Nester erstellt, so daß bei gleichem Zyklus mehrere Teile gleichzeitig hergestellt werden. Bekannt ist es in der Form mehrere Kanäle herzustellen, die den Kunststoff zu den einzelnen Nestern führen. Der Nachteil dieses Verfahrens besteht jedoch darin, daß der in den Kanälen befindliche Kunststoff mit ausgestoßen werden muß, wodurch ein nicht unerheblicher Abfall entsteht, der bei kleinen Artikeln mehrere 100 % des Artikelgewichtes ausmachen kann.

Um diesen Abfall zu vermeiden ist es bekannt, zwischen der Aufspann- und der Formplatte Heißkanäle einzusetzen, die Düsen aufweisen und die Aufgabe haben, den Kunststoff zwischen den Zyklen spritzbereit zu halten und den Abfall zu begrenzen. Bekannt ist es, den Heißkanal in Blockform auszubilden und in diesem Heizelemente einzusetzen, wobei der Heißkanal innen wie außen die gleiche Temperatur aufweist, d. h. die Schmelztemperatur des Kunststoffes. Diese Schmelztemperatur kann z. B. bei Polyamid 6-6 270° aufweisen, während die Formtemperatur zwecks einer schnellen Erstarrung des Kunststoffes etwa 60° beträgt. Die hierdurch bedingten Nachteile bestehen darin, daß die Formplatten nur über Stützsegmente abgestützt werden können, was eine instabile Form bewirkt, wobei gleichzeitig die Längenausdehnung zwischen dem Heißkanal und den anderen Bereichen berücksichtigt werden muß. Es sind starke Kühlungen erforderlich um die Formtemperatur niedrig zu halten, was zu einer Energieverschwendung führt. Darüberhinaus besitzt der Heißkanal auch eine große Masse und bedingt somit einen großen Energieverbrauch.

Darüberhinaus sind Heißkanäle bekannt, bei denen der in den Bohrungen befindliche Kunststoff durch in die Bohrungen eingezogenen Heizdrähten beheizt wird. Oberflächenbeheizung des Kunststoffes hat den Vorteil, daß die Temperaturverteilung im Kunststoff sehr gleichmäßig ist und hierdurch sehr gute Spritzergebnisse erzielt werden. Der Nachteil besteht jedoch darin, daß der gesamte Heißkanal aufgeheizt werden muß, was zu den oben beschriebenen Problemen führt. Die Beheizung der Kanäle im Heißkanal von innen heraus ist wirtschaftlicher und bedingt einen geringeren Energieeinsatz, allerdings besteht hier der Nachteil, daß der Kunststoff sich zu seinen äußeren Rändern hin stark abkühlt, so daß, damit dieser auch an den Rändern eine ausreichende Spritztemperatur aufweist, dieser in der Mitte stark überhitzt werden muß. Hierdurch werden gleichermaßen die Spritzzyklen verlängert.

Aus der DE-A 35 33 730 ist ein Heißkanal bekannt, der aus einem runden Mantelrohr besteht, in dem ein Führungsrohr über Abstützelemente angeordnet ist. In diesem Führungsrohr fließt der thermoplastische Kunststoff. Um den Außenmantel des Führungsrohres ist ein Heizdraht gewickelt, der eine nach innen verlagerte Außenheizung des Führungsrohres bewirkt. Das Führungsrohr ist einschließlich Mantelrohr in einer Bohrung der Verteilerplatte 7 eingesetzt. In dieser Verteilerplatte sind auch die Querbohrungen angeordnet, die die Düsen aufnehmen, über die der verflüssigte Kunststoff austritt.

Der Erfindung liegt die Aufgabe zugrunde, die Nachteile der bekannten Heißkanäle zu vermeiden, insbesondere einen Heißkanal vorzuschlagen, der flächig mit der Aufspann- und Formplatte verbindbar ist, ohne daß die Gefahr zu großer Wärmeübertragung auf Aufspann- und Formplatte besteht und der vor allem einfach und wirtschaftlich zu fertigen ist.

Diese Aufgabe wird mit den Merkmalen des Anspruches 1 gelöst.

Gemäß der Erfindung besteht somit der Heißkanal aus einem Block, in dem eine Längsbohrung angeordnet ist, in die Querbohrungen einmünden für den Anschluß der Verbindungsdüsen und Abzweigdüsen. In dieser Längsbohrung ist ein Einsatzkörper mit den Materialführungsbohrungen für die Verbindung der Querbohrungen eingesetzt. Dieser Einsatzkörper weist Nuten in seiner Oberfläche auf, in die Heizelemente eingesetzt sind. Des weiteren sind in den Heißkanalkörper Verbindungselemente für die radiale und axiale Festlegung von Heißkanalkörper und Einsatzkörper eingesetzt.

Ein erfindungsgemäß ausgebildeter Heißkanal ist somit zumindest zweiteilig ausgebildet und besteht aus zwei getrennt fertigbaren Körpern und zwar dem Heißkanalkörper sowie dem Einsatzkörper. Nach der Herstellung der beiden Körper werden diese ineinandergeschoben und mittels der Verbindungselemente in radialer wie auch in axialer Richtung derart fixiert, daß die Materialführungsbohrungen im Einsatzkörper mit den Anschlüssen im Heißkanalkörper fluchten. Der Heißkanalkörper wird an seinen beiden Oberflächen, die zur Anlage an der Aufspann- wie an der Formplatte kommen, eben ausgebildet, so daß hier eine flächige Anlage erhalten wird und somit eine stabile Verbindung von Aufspann- und Formplatte. Der Einsatzkörper wiederum braucht keine Druckkräfte zu übertragen, sondern muß lediglich dafür ausgebildet sein, die Verbindungsdüsen in dem Heißkanalkörper zwischen der Aufspannplatte und der Formplatte über die Materialführungsbohrungen zu verbinden. Die Heizelemente sind in Nuten des rohrförmig ausgebildeten Einsatzelementes eingelegt, wobei auf diese Heizelemente Abschirmbleche aufgelegt sein können, die eine Abstrahlung der Wärme zu dem Heißkanalkörper hin verhindern oder zumindest beeinträchtigen. Des weiteren kann zwischen dem Heißkanalkörper und dem Einsatzelement ein Isolierrohr eingeschoben werden, das den Wärmefluß zwischen Einsatzelement und Heißkanalkörper weiter verringert.

Eine besonders vorteilhafte und wirtschaftlich zur fertigende Ausbildung des Heißkanalkörpers ist gemäß dem Anspruch 2 dadurch gekennzeichnet, daß der Heißkanalkörper nicht nur eine Längsbohrung aufweist, sondern darüberhinaus mindestens eine quer zur Längsbohrung sich erstreckende Bohrung, in die Knotenelemente eingesetzt werden, die eine entsprechende Längsbohrung wie die Längsbohrung des Heißkanalkörpers aufweisen und die darüberhinaus die Anschlußbohrungen für den Zu- und Abfluß des Materiales aufweisen. Je nach Anzahl der in der Form gebildeten Nester und der gewählten Verzweigung im Heißkanal können zwei und mehr Knotenelemente in den Heißkanalkörper eingesetzt werden. Diese Knotenelemente werden in radialer Richtung durch den durch diese und den Heißkanalkörper geschobenen Einsatzkörper fixiert, während die axiale Fixierung durch die Verbindungselemente erfolgt, die die Knotenelemente einerseits mit dem Einsatzkörper und andererseits mit der Aufspann- und Formplatte verbinden.

Ein wesentlicher Vorteil eines erfindungsgemäßen Heißkanales besteht neben seiner einfachen und stabilen Konstruktion, die die flächige Verbindung von Aufspann- und Formplatte zuläßt darin, daß der Wärmebedarf gegenüber sonst üblichen von außen beheizten Heißkanälen auf 30 bis 50 % gesenkt werden kann, wodurch gleichzeitig der Spritzzyklus erhöht wird.

Zwei Ausführungsbeispiele der Erfindung sind im folgenden anhand der Zeichnung näher beschrieben, in dieser zeigen:
- Fig. 1: eine schematische Darstellung einer Kunststoffspritzmaschine,
- Fig. 2: einen Längsschnitt durch einen Heißkanal
- Fig. 3: einen Längsschnitt durch eine weitere Ausführungsform eines Heißkanals,
- Fig. 4: eine Draufsicht auf das Ausführungsbeispiel nach Fig. 3,
- Fig. 5: eine Seitenansicht des Ausführungsbeispieles nach Fig. 3 und
- Fig. 6: eine Seitenansicht einer weiteren Ausführungsform eines Knotenelementes.

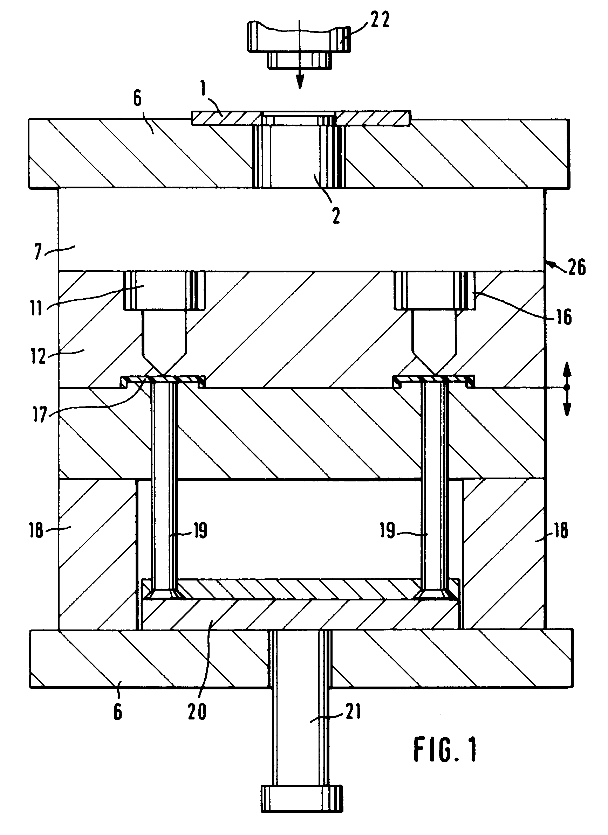

In Fig. 1 ist eine Seitenansicht einer Kunststoffspritzmaschine in schematischer Darstellung gezeigt. Die Kunststoffspritzmaschine besteht aus zwei Aufspannplatten 6 zwischen denen eine geteilte Formplatte 12 eingespannt ist, die die Nester für die herzustellenden Spritzgußstücke enthält. Zwischen der oberen Aufspannplatte 6 und der Formplatte 12 ist ein Heißkanal 26 angeordnet, der flächig an der Aufspannplatte 6 und an der Formplatte 12 anliegt. Über die Anschlußdüse 2, den Heißkanal 26, den Düsen 11 wird der Formplatte der Kunststoff zugeführt. Der Heißkanal hat die Aufgabe, den in den Materialführungsbohrungen befindlichen Kunststoff flüssig und damit die Verluste gering zu halten.

Nach unten ist die Formplatte 12 über zwei Stützleisten 18 gegenüber der unteren Aufspannplatte 6 abgestützt. Zwei Auswerfer 19 dienen zum Ausstoßen des im Nest 17 erstarrten Kunststofformlings. Die Auswerfer 19 werden über eine Auswerferplatte 20 über einen Auswerferbolzen 21 betätigt. Mit 22 ist eine Zuführdüse bezeichnet, über die der Kunststoff der Anschlußdüse 2 zugeführt wird.

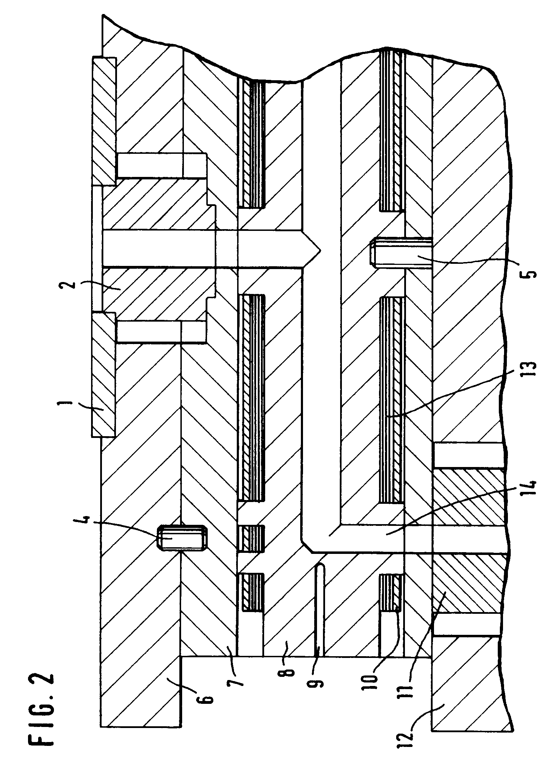

In Fig. 2 ist ein erfindungsgemäßer Heißkanal dargestellt, der zwischen einer Aufspannplatte 6 und einer Formplatte 12 eingespannt ist. In der Aufspannplatte 6 ist ein Zentrierring 1 angeordnet, der zur Halterung einer Anschlußdüse 2 dient. Der Heißkanal besteht aus einem Heißkanalkörper 7, in dem in einer Längsbohrung 25 ein Einsatzkörper 8 eingesetzt ist. Im Einsatzkörper 8 sind Materialführungsbohrungen 14 ausgebildet, durch die der Kunststoff von der Anschlußdüse 2 zu den Düsen 11 für die Einspritzung des Kunststoffes in die Nester 17 der Form transportiert wird. Zur radialen wie auch axialen Fixierung des Heißkanalkörpers 7 in der Aufspannplatte 6 dient ein Verbindungselement 4, das in Bohrungen des Heißkanalkörpers 7 wie auch der Aufspannplatte 6 eingreift.

Auf der Außenseite des Einsatzkörpers 8 sind Nuten angeordnet, in die Heizelemente 13 eingesetzt sind. Um die Heizelemente 13 sind Reflexionsbleche 10 gelegt, die den Heißkanalkörper 7 gegen Strahlungswärme abschirmen. Die Nuten im Einsatzkörper 8, die die Heizwicklungen aufnehmen, stehen darüber ganz oder teilweise mit Bohrungen mit der Außenluft in Verbindung.

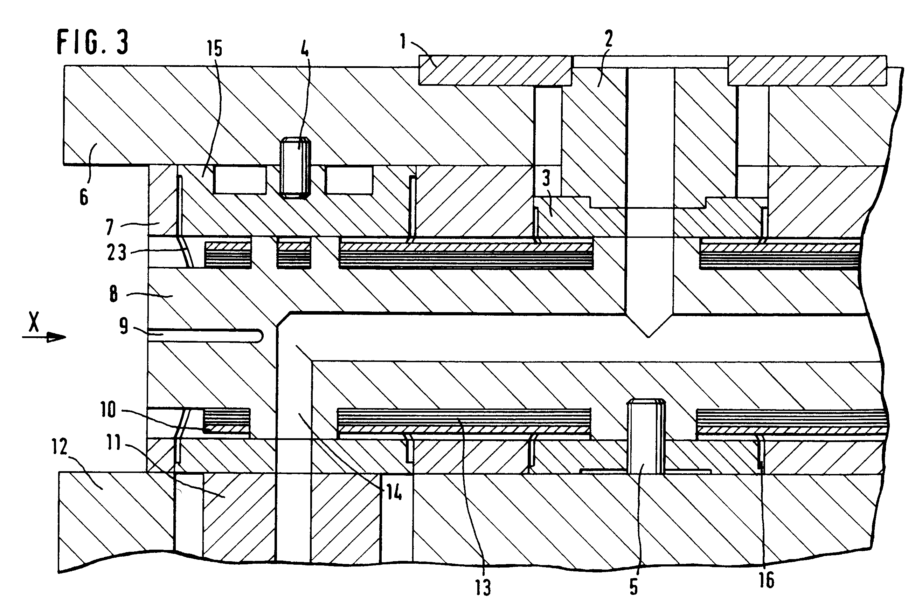

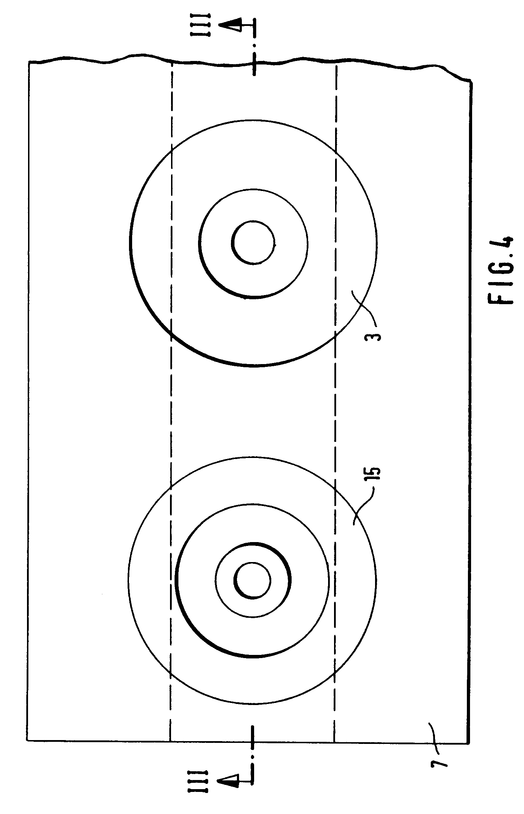

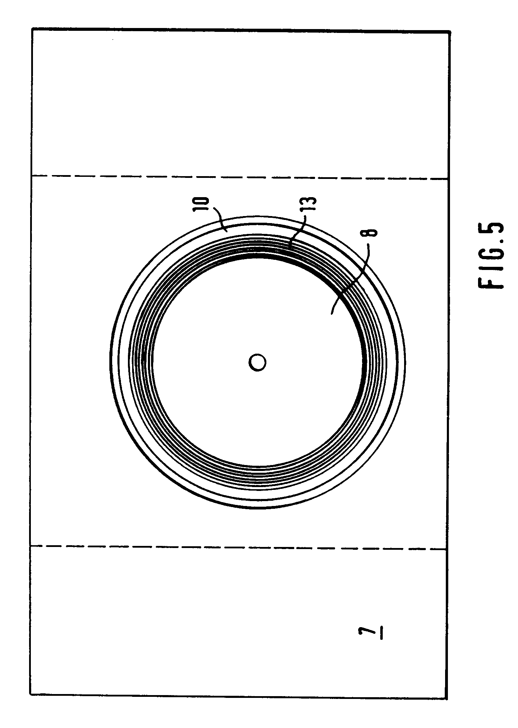

Das Ausführungsbeispiel nach den Fig. 3 bis 5 unterscheidet sich von dem nach den Fig. 1 und 2 dadurch, daß in den Heißkanalkörper nicht nur eine Längsbohrung zur Aufnahme des Einsatzkörpers 8 ausgebildet ist, sondern darüberhinaus zusätzliche quer zur Längsbohrung verlaufende Bohrungen, in denen Knotenelemente 3, 15 eingesetzt sind. Diese Knotenelemente weisen die gleiche Längsbohrung 24 auf, wie der Heißkanalkörper, so daß durch den Heißkanalkörper und die Knotenelemente der Einsatzkörper 8 geschoben werden kann. In axialer Richtung sind die Knotenelemente durch den Heißkanalkörper 7 fixiert. In radialer Richtung erfolgt die Fixierung durch den Einsatzkörper 8. Gegen Drehung und zur Fixierung des gesamten Heißkanalkörpers an der Aufspannplatte 6 wie auch an der Formplatte 12 dienen Verbindungselemente 4, die in entsprechenden Bohrungen der Knotenelemente 15, 3 und der Aufspannplatte 6 bzw. des Einsatzkörpers 8 eingesetzt sind.

In den Seitenflächen der Knotenelemente 3, 15 sind Hinterschneidungen 16 ausgebildet, was den Vorteil hat, daß lediglich die äußeren Umfangsflächen der Knotenelemente maßgenau gearbeitet werden müssen.

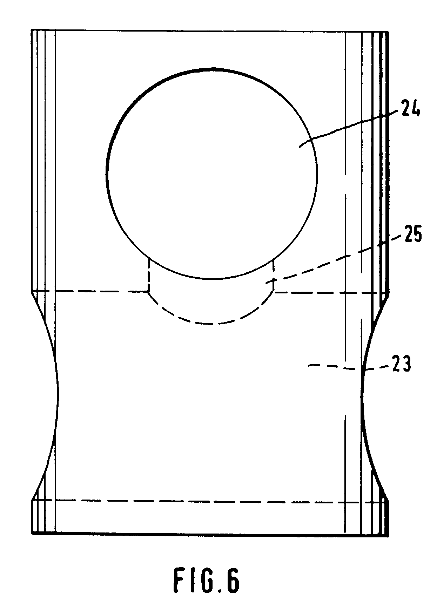

In Fig. 6 ist eine weitere Ausführungsform eines Knotenelementes gezeigt. Dieses Knotenelement weist im Gegensatz zu dem Knotenelement 15 nach dem Ausführungsbeispiel nach Fig. 3 bis 5 zwei Bohrungen 23 und 24 auf, in denen Einsatzkörper eingesetzt sind. Diese beiden Bohrungen dienen zur Harzverteilung und sind untereinander über eine Bohrung 25 verbunden.

## Patentansprüche

1. Heißkanal in Blockform (Quader) mit Befestigungsmittel für die Aufspann- und Formplatte von Kunststoffspritzmaschinen, dadurch gekennzeichnet, daß der Heißkanalkörper (7) Längsbohrungen (25) mit Querbohrungen für den Anschluß der Verbindungs- und Abzweigdüsen (2, 11) aufweist, daß in der Längsbohrung (25) ein Einsatzkörper (8) mit Materialführungsbohrungen (14) für die Verbindung der Düsen (2) in der Aufspannplatte (6) und der Formplatte (12) eingesetzt ist, daß der Einsatzkörper (8) mit Nuten für die Aufnahme von Heizelementen (13) versehen ist, daß in den Heißkanalkörper (7) Verbindungselemente (4, 5) für die radiale und axiale Festlegung von Heißkanalkörper (7) und Einsatzkörper (8) eingesetzt sind.

2. Heißkanal nach Anspruch 1, dadurch gekennzeichnet, daß der Heißkanalkörper (7) mindestens eine quer zur Längsbohrung verlaufende und den Körper durchsetzende Bohrung aufweist, daß in jede der Bohrungen ein Knotenelement (3, 15) eingesetzt ist, das mit der Längsbohrung des Heißkanalkörpers koaxiale Bohrungen (23) die Materialführungsbohrungen (14) für die Verbindung mit der Anschlußdüse (2) und der Materialdüse (11) aufweist.

3. Heißkanal nach Anspruch 2, dadurch gekennzeichnet, daß das Verbindungselement (4, 5) im Knotenelement (3, 15) eingesetzt ist.

4. Heißkanal nach einem der vorhergehenden Ansprüche, dadurch gekennzeichnet, daß im Einsatzkörper (8) ein Thermoelement eingesetzt ist.

5. Heißkanal nach einem der vorhergehenden Ansprüche, dadurch gekennzeichnet, daß über die Heizelemente (13) ein Wärmereflexionsrohr (10) geschoben ist.

6. Heißkanal nach einem der vorhergehenden Ansprüche, dadurch gekennzeichnet, daß jedes Knotenelement (15) zwei oder mehrere winklig zueinander liegende Bohrungen (23, 24) aufweist, die untereinander über eine Bohrung (25) miteinander in Verbindung stehen.

7. Heißkanal nach einem der vorhergehenden Ansprüche, dadurch gekennzeichnet, daß die Bohrungen (23, 24) winklig zueinander liegen.

## Claims

1. A hot channel in block form (parallelepiped) with fastening means for the mounting and moulding plates of plastics injection moulding machines, characterised in that the hot channel body (7) has longitudinal bores (25) with transverse bores for the junction of the connecting and branch nozzles (2, 11), in that an insert element (8) with material feed bores (14) for connecting the nozzles (2) in the mounting plate (6) and the moulding plate (12) is inserted in the longitudinal bore (25), in that the insert element (8) is provided with grooves for receiving heating elements (13), in that connecting elements (4, 5) for radially and axially securing the hot channel body (7) and insert element (8) are inserted in the hot channel body (7).

2. A hot channel according to claim 1, characterised in that the hot channel body (7) has at least one bore extending transversely to the longitudinal bore and penetrating the body, in that a node element (3, 15) is inserted into each of the bores and has bores (23), which are coaxial with the longitudinal bore of the hot channel body, [and] the material feed bores (14) for the connection with the connecting nozzle (2) and the material nozzle (11).

3. A hot channel according to claim 2, characterised in that the connecting element (4, 5) is inserted in the node element (3, 15).

4. A hot channel according to any one of the preceding claims, characterised in that a thermoelement is inserted in the insert element (8).

5. A hot channel according to any one of the preceding claims, characterised in that a heat reflection tube (10) is pushed over the heating elements (13).

6. A hot channel according to any one of the preceding claims, characterised in that each node element (15) has two or more bores (23, 24) lying at an angle to each other and being connected to each other via a bore (25).

7. A hot channel according to any one of the preceding claims, characterised in that the bores (23, 24) lie at an angle to each other.

## Revendications

1. Canal de chauffage dans le bloc moule (parallélépipède), comportant les moyens de fixation pour le plateau de serrage et moulage des machines pour l'injection de matière plastique, caractérisé en ce que le corps du canal de chauffage (7) présente des alésages longitudinaux (25) et des alésages transversaux pour le raccordement des buses de raccordement et des buses de dérivation (2, 11), en ce que, dans l'alésage longitudinal (25), est inséré un corps d'insertion (8) comportant des alésages d'amenée de la matière (14) pour relier les buses (2) situées dans le plateau de serrage (6) au plateau de moule (12), en ce que le corps d'insertion (8) présente des rainures destinées à recevoir des éléments de chauffage (13), en ce que, dans le corps du canal de chauffage (7), sont insérés des organes d'assemblage (4, 5) pour fixer radialement et axialement le corps du canal de chauffage (7) et le corps d'insertion (8).

2. Canal de chauffage suivant la revendication 1, caractérisé en ce que le corps du canal de chauffage (7) présente au moins un alésage disposé transversalement par rapport à l'alésage longitudinal et traversant le corps, en ce que, dans chacun de ces alésages, est inséré un élément intermédiaire (3, 15), qui présente, avec des alésages (23), coaxiaux avec l'alésage longitudinal du canal de chauffage, des alésages (14) d'amenée de la matière destinés à la liaison avec la buse de raccordement (2) et la buse de dérivation (11).

3. Canal de chauffage suivant la revendication 2, caractérisé en ce que l'organe d'assemblage (4, 5) est inséré dans l'élément intermédiaire (3, 15).

4. Canal de chauffage suivant l'une quelconque des revendications précédentes, caractérisé en ce que, dans le corps d'insertion (8), est inséré un thermoélément.

5. Canal de chauffage suivant l'une quelconque des revendications précédentes, caractérisé en ce qu'au-dessus des éléments de chauffage (13), est glissé un tube réfléchissant la chaleur (10).

6. Canal de chauffage suivant l'une quelconque des revendications précédentes, caractérisé en ce que chaque élément intermédiaire (15) présente des alésages (23, 24), au nombre de deux ou plus, disposés en formant un angle les uns par rapport aux autres, qui sont reliés entre eux par un alésage (25).

7. Canal de chauffage suivant l'une quelconque des revendications précédentes, caractérisé en ce que les alésages (23, 24) sont disposés en formant un angle les uns par rapport aux autres.
